# EUROPEAN PATENT APPLICATION

(11) **EP 2 860 313 A1**
(43) Date of publication of application: **15.04.2015**
(21) Application number: 12785667.2
(22) Date of filing: 15.05.2012
(51) Int. Cl.: E01F 9/013, G09F 9/30

(54) **SUSPENSION TYPE ROAD TRAFFIC WARNING SIGNS AND SIGN SYSTEM**

(30) Priority: 16.05.2011 CN 201110125589
(71) Applicant: Lee, Kuy-Trau, Neijiang, Sichuan 641000 (CN)
(72) Inventor: Lee, Kuy-Trau, Neijiang, Sichuan 641000 (CN)
(74) Representative: Hocking, Adrian Niall
(86) International application number: PCT/CN2012/000656
(87) International publication number: WO 2012/155534

(57) **Abstract**

A suspension type road traffic warning signs and a sign system are provided, which belong to the machinery manufacturing field. To solve the technical problem that warning signs must be set at 150 meters away when a car in operation breaks down, a solution is put forward that the warning signs (1,2,3,4) and the sign system (5,6,7,8) are assembled with balloons (1-2, 2-2, 3-2, 4-2), scrolls (25), heavy objects (14), miniature remote control cars (5-1), miniature helicopters (6-1), small rockets (9), skidding tools and rods (17). The suspension type road traffic warning signs and the sign system are suitable for the condition that warning signs must be set when cars are broken down in driving.

## Description

### Technical Field

The invention is for the road traffic signs, especially for four kinds of suspension road traffic warning signs and six suspension road traffic warning signal system. It belongs to the technical field involving mechanical manufacturing and civilian rocket manufacturing.

### Technical Background

As it is defined in Article 68 in *The Road Traffic Safety Law of People's Republic of China (01*/*05*/*2004),* wherein the case should be issued under the relevant regulations in Article 52 of this law given that the vehicles break down on the high way; however, the warning signs should be set beyond 150m far from the broken car in the coming direction. In the Article 60 in *The Implementation Regulation For The Road Traffic Safety Law of People's Republic of China* from The State of Council, it regulates that if the vehicle breaks down on the road or encounters traffic accident, and it is difficult to move the vehicle off the road, the driver should turn on the hazard light and set the warning signs between 50m and 100m from the back of the vehicle based on the regulation. It is not hard to turn on the hazard light, but it is difficult and dangerous to set the warning signs more than 150m far away from the broken car in the coming way. The reason is the driver has to run at least 150m far to set the warning signs and run another 150m back to fix the vehicle. After that the driver will have another two 150m to finish to get the temporary warning signs back. The whole running (or fast walking) distance is 600m. And it will reach up to more than 600m if we take the avoidance to the road settings and misjudgment to the distance into consideration, which is definitely dangerous and difficult to everyone.

The regulations above from the traffic law are valid. The traffic law and the implementation regulations from The State of Council rules that the speed for the vehicles on the high ways ranges from 60km/h to 120km/h; the vehicle with the speed of 105km/h needs a distance of 96m to stop from the moment noticing the signs (including 21m for reacting and 75m for braking). As a result, it is necessary and reasonable for the traffic law to regulate the "over 150m-long distance" for the warning signs setting.

The four ways for supporting the traffic signs available now are column type, hanging type, gantry type and attached type, whose main and supportive parts are made by rigid plastic or hard alloy. Such rigid form of signs has been produced since then and deeply rooted in mind so that, at thought of signs, most people have conventional conception of the standardized ones with fixed height and shape. However, embedded bias to the technology of manufacturing traffic signs have come into being, although the normalization of the products manufacturing and establishment of their standards mark the maturity in technology.

Therefore, to resolve difficulties and conflicts caused in carrying out traffic rules and laws, it is necessary to overcome three kinds of bias that traditional traffic signs need to be made by hard materials with fixed supported height, that children toys will not be used to manufacture traffic signs, and that the signs should not be set up by the other forces but by labor force. By overcoming the bias, the technology in this area can improve and make progress. Here, the fifth supportive type of traffic signs is put forward that is completely different from the four present ones.

There is a series of rules and laws of designing and setting up traffic signs on roads, for example, the general provisions on guiding principles and procedure of design. The designing object used as traffic signs should give comprehensive consideration of road networks and such various factor as, roads, traffic, meteorology, and environment, ......( JTG/TD81-2006 "the Design Rules for Roads and Traffic Safety" p.37-38, the industry recommended standards of P.R.C., issued by the Ministry of Communications of P.R.C. on July 7, 2006, implemented by September 1, 2006). All above mentioned regulations is the stipulation to technology in operation and description to the current situation of technology.

When automobile breaks down, disasters often occur if traffic signs fail to be set up as warnings. In China, a famous comedian died from such accident. Because of lack of traffic signs a girl's leg was hurt when she saved others. With the rapid development of road system, there are some cases in Beijing that drivers refuse to accept sentence of penalty or being fined, because of problems of setting up traffic signs. Considering these, the only solution to these tragedies is to perfect technology on the condition of improving new technology and optimizing regulations and laws.

### Content of Invention

The invention is designed to solve the technical problems that difficulties and dangers will be encountered in the process of setting warning signs at 50 or 150 meters away when a automobile in operation breaks down on the road.

To solve the above mentioned problems, the invention puts forward four kinds of suspension road traffic warning signs and six suspension road traffic warning signal system. The technical solution to the above mentioned technical problems in the application is an exploration and presenting technical measures of problem solving from two perspectives. One is to make a kind of suspension warning signs which is higher than present temporary warning signs in height, for example, to make the signs with the height of 3-5meters or higher, because higher position of traffic signs gains earlier attention from drivers and take respective measures ahead of time. Hence, such signs, not suitable to manufactured by the present materials, should be foldable and made by the textile products and balloons which are easier to carry about. Balloons can be inflated with the light gas, such as, hydrogen and helium. The textile products which are lightest and thinnest materials are used to make flat banners with 0.7-3meters long and 0.2-0.9 meters wide. The substitution of textile products can be plastic film. Besides flat shaped banners, cylindrical banners can also be adopted. Both balloons and banners, in light with standard printing, should be painted with the graphical symbols, the traffic warning signs under-painted with yellow color. The reflective film or retro-reflective materials used for manufacturing should meet the requirements in force, "Reflective Film for Traffic Signs" (GB/T18833) If the effect is not so good as the requirements, the external or internal lighting can be adopted in accordance with the existing stipulation of "Traffic Signs and Line marking". In addition, the suspension warning signs can also use graphics demonstrated by light emitting diode (LED), whose color should conform to the frame or background of signs. If flashing is need, each unit of flashing signals should blink at the frequency of more than 50 times and less than 60 times per minutes. The mode of lighting and led should maintain the homogeneity of signs design, which should not decrease the visibility, readability, convenience for drivers' understanding at day and night. When in use, balloons and signs of graphic suspended in the air, which gives the name of the suspension traffic warning signs. The balloons and banners are connected with a heavy object by cordages and wires. If one balloon fails to float, more balloons can be added. There are several ways of adding balloons, that is, cascade, parallel connection, and mix connection, to connect balloons. And the signs with only one balloon are called the basic type or single connection. The size of the balloons can vary as long as they are easy to carry. They can be shaped round, oval or irregularly.

The different combination of balloons and banners forms four kinds of suspension traffic warning signs, called type Q-1, Q-2, Q-3, and Q-4 respectively. Heavy object 14 can balance buoyancy of balloons and fix its position, and the weight of heavy object and banners should be slightly heavier than the total buoyancy of balloons. Based on the weight of banners and wind force in the locality, the weight of heavy object can be adjusted. In the windy area or season, the weight is heavier or regulated by adding or reducing heavy objects onto the spring hook. The number of balloons connected with various types of traffic signs can be added from one to seven or even more. However, it is not very convenient to take and use so many balloons, while fewer balloons means fewer traffic warning signs, which make it more difficult for other drivers to discover the signs in advance, not mention the failure to suspend banners. Under the circumstance of sufficient buoyancy force and adequate warning signs, balloons can be used as few as possible. Heavy object, installed built-in hazard light, might as well be made of the transparent materials, epoxy resin or polyethylene. Balloons can be blown up in balloon shop or by the portable pump.

Another technical measure is application of carrier and retrieving tool. The users of this invention will try to set up traffic signs with less labor force.

The tool carrying the suspension sign can be wireless remote control car. Such car is' made into different types and specification. The smallest one can be 1/18 of real model and the largest can hold a kid. They are not suitable because the size is too small or too large. Nowadays, there are many models of mini wireless remote control car, one of which costs nearly one thousand Chinese Yuan and is powerful to drive 200 meters. To decrease price and promote the invention, possible solution can be mass customization to manufacturer, designing a model that can drive 150 meters. Another alternative is to use remote control helicopter, a model built in Gyro Stabilizer. This kind of carrier is 3D comprehensive T37 helicopter model with functions of remote control of acceleration and automatic frequency modulation. A-3 and A-4 series is the development and improvement of A-2 series by removing the balloons of A-2 series with remote control helicopter, which both function as carrier and balloons carrying suspension banners. A-3 and A-4 series, more convenient to use, contain biggest advantage that balloons will not be used. Many models of mini remote control helicopter that can meet demand of A-2 series (including A-3 and A-4 series) are available. Taking the 450 class electric helicopter for example, this model can perform flight tasks required by A-2 series, such as, spot hover, going forward, drawing back and etc. Set by the infrared remote transmitter, the model with weight of 800g, ranges from 500 to 1000 meters and easily reaches the flight altitude of 500 meters. With maximum lift coefficient of 2kg, it can also perform normal flight task when picking up heavy object of 500g. Although this type of helicopter performance is outstanding, it is not suitable to the promotion of A-2 series for its high cost. But, this model suggests that the production and technical level can achieve the requirements of A-2 series. The possible solution is the mass customization of remote control helicopter with range of 150 meters to the manufacturer. This model costs less, easier to promote. The key to technology of remote control helicopter is power, which can be produced by internal combustion engine or electricity. The previous is expensive, complicated to operate, involving problems of fuel, start and firing, and not environmental friendly. Therefore, the latter one is favorable, but the key is the use of battery with lower cost and longer duration and suitable for popularization and promotion. Such battery has sufficient power to sustain mini helicopter's cruising distance and levitation control. Besides, other factors, such as, operating temperature range, environmental protection, are considered. This kind of battery can be found in the market, especially in some special and highly professional field abroad. That is the 5th un-chargeable lithium battery, popular in the market and enjoying more obvious advantages than alkaline battery. Firstly, the capacity of this battery can reach about 3000 mAh, comparing the limited capacity of alkaline battery, 2000mAh. Discharged fully, practical service time of the 5th lithium battery is several times longer than alkaline battery. Secondly, the lifespan is very long. Discharging phenomenon is slight and 90% electric quantity still is preserved after ten years' storage. Thirdly, great capacity discharges high current. The discharging capacity of this battery can be three or four times greater than that of ordinary battery in the condition of high current of 1A. At the high current of 2A, the discharging capacity is twenty five times greater than that of ordinary type. Fourthly, the wide operation temperature range make it possible to use battery without decreasing its performance at the temperature of -40oC-60oC. Fifthly, the weight of battery is light. Sixthly, the battery is friendly to environment, 1/3 lighter than alkaline battery in weight and not producing as much pollution of lead, mercury, and chrome. Seventhly, the price is acceptable. Each battery is sold at price of 10 dollars or 1-5 Chinese Yuan, which can be found on the internet by typing into key words: Energizer (RTM), the 5th battery, lithium battery, 1.5v, and L91. The above mentioned matters prove that there is one kind of battery at least can support the application of A-2. In particular, the functions of the battery almost suit all demands of A-3. Consuming more electric power, A-3 can take use of more environmental friendly photovoltaic cell, such as a thin-film photovoltaic battery which was developed by research center of Suntech Lit. At the earlier stage of promoting A-4 series, Lithium battery can work with, and gradually be replaced by, photovoltaic cell. And also, the civil small rocket can be used as carrier, for instance, the rocket loaded with 10g-30g black powder can carry Q-1 and Q-3 signs. If the rocket can not carry the heavy object, the carrying capacity can be improved by filling into more quantity of the black powder or binding together three rockets loaded with 20g black power for each, which equal to one large rocket loaded with black powder of 60g. Such combination of rockets can send the traffic signs at the range of 150 meters. Meanwhile, the high-temperature gas is to be erupted from the rocket, so the connecting line and vehicle scroll line should be made of mental wire or flame resistant materials. The scroll can be used as the retrieving tool and the rocket has no cumulative effects. Other skating tools like roller skate, sliding plate, and scooter can be used as carriers, sending traffic signs to the designated position through people's skills and little labor force and all retrieved by vehicle scroll. There are many standards for skating tools. Sliding plate can be installed with two or four wheels. Scooter can be fitted with two or three wheels, and steering handle or steering wheel. The multiple choices are offered to decide in light with the concrete conditions of users.

The six traffic sign system above mentioned have their own merits and drawbacks, and different people may have varied preference. In accordance with the trials, small rocket causes more problems, because connecting lines and banners are specially required to be made of flame resistant material. On the other hand, the rocket is characterized by its greatest advantage of longest range. It is easy for it to reach 150 meters away. Skating tools may encounter dangers, but it is much faster than walking, which shorten the time, decrease the risks, and reduce the consumption of labor force. Moreover, time and danger may cut down into half by using retrieving scroll.

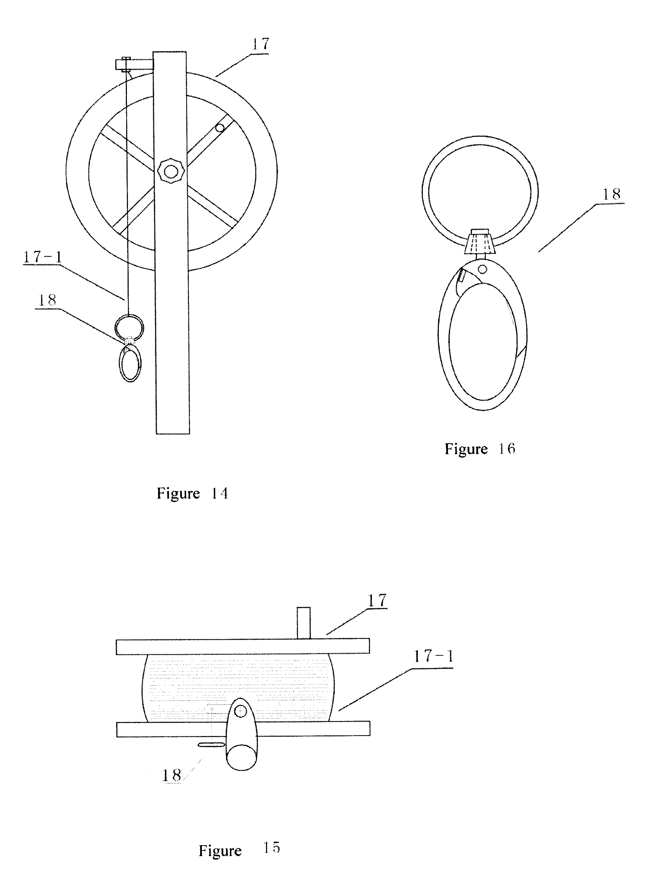

The combination and assembly of types of traffic signs and carriers are not fixed and unchangeable. For instance, the remote control car can be collocated with the sign Q-2 or Q3, and the remote control helicopter with Q-1. Taking factors of security, environmental protection, and economy into comprehensive consideration, it is better, at initial stage, to promote traffic signs, Q-1 and Q-3, traffic system, A-1, A-2, A-3, A-4, and A-6 series. The parts making up signs for the suspension system, carriers, retrieving tools are all ready to be sold in the market. And some parts just need to have somewhat improvement. For example, stick a reflective film to the balloon; dispose of some unnecessary functions of remote control car or helicopter; preset three gears of 50m, 100m, 150m, refining carriers so that they can be more suitable to meet demands of suspension sign system. As shown in figure 14, figure15, retrieving tool can use scroll of flying kite, which is simple, convenient, and easy to use.

The balloons can be inflated with hydrogen in the shop, by portable pump or widely used aeration tank. Spring hook 18 can not only be used as the connecting parts of various types of suspension sign system, but replace the connecting loop (6-2). The spring hook 18 can connect each part conveniently, rapidly, and reliably.

| Columns and No. | Main Technical Features (1) | Materials for Manufacturing (2) | The Carriers of Symbols (3) | Supporting Mode (4) | Carrying and Retrieving Mode (5) | Warnings and Lighting(6) | Setting Procedure A (7) | Setting Procedure A (8) | Using effects (9) |
|---|---|---|---|---|---|---|---|---|---|
| Existing Signs | Graphic symbols of warning signs | Sheet steel, aluminum alloy, synthetic resin | Marking plate, reflective film | Steel tube supported by steel post | Labor force | Hazard warning flashlight | Walk or jog over 600 meter | Walk or jog over 600 meter | Long setting distance, dangerous, hardwor |
| Suspe nsion Sign System | Graphic symbol of warning signs | Cotton and linen fiber, Chem ical fiber, plastic cordage, | Balloon, banner, reflective film | Balloon suspended by mini helicopter, small rocket, skating tools and | Remote control mini car, helicopter, small rocket, skating tools and scroll | Hazard warning flashlight | Use skating or retrieving tools to slide within the range of 300 | Use remote control mini car, helicopter, and rocket without walking | Shorter distance, secure, convenient, fast, time-saving |

### Figures:

Figure 1: view of Q-1 type of suspension traffic warning sign
Figure 2: view of Q-2 type of suspension traffic warning sign
Figure 3: view of Q-3 type of suspension traffic warning sign
Figure 4: view of Q-4 type of suspension traffic warning sign
Figure 5: three dimensional view of A-1 type of suspension traffic warning sign system
Figure 6: three dimensional view of A-2 type of suspension traffic warning sign system
Figure 7: three dimensional view of A-3 type of suspension traffic warning sign system
Figure 8: three dimensional view of A-4 type of suspension traffic warning sign system
Figure 9: the view of the third carrier, rocket for civil use
Figure 10: the view of the fourth carrier, roller skates
Figure 11: the view of the fifth carrier, sliding plate
Figure 12: the view of the sixth carrier, scooter
Figure 13: the view of aeration tank
Figure 14: the view of retrieving tool, scroll
Figure 15: the bird view of retrieving tool, scroll
Figure 16: the view of spring hook

Comparison Table for Features of Signs and Symbols

| Sign | Features of the symbol | | |
|---|---|---|---|
| 1 | - Q-1 warning sign | | |
| 2 | - Q-2 warning sign | | |
| 3 | - Q-3 warning sign | | |
| 4 | - Q-4 warning sign | | |
| 5 | - A-1 warning sign system | | |
| 6 | - A-2warning sign system | | |
| 7 | A-3 warning sign system | | |
| 8 | A-4 warning sign system | | |
| | | | |

| Sign | Features of the symbol | | |
|---|---|---|---|
| 1-1,2-1 | | | |
| 3-1, 4-1 | - Signs of graphic symbol | | |
| | | | |
| 1-2, 2-2 | | | |
| 3-2, 4-2 | -Balloon | | |
| | | | |
| 1-3, 2-3 | | | |
| 3-3, 4-3 | - Connecting line | | |
| | | | |
| 2-4 | - support rod | | |
| 2-5 | - flat banner | | |
| 3-4 | - support ring | | |
| | | | |
| 9 | - small rocket | 3-5 | - cylinder banner |
| 10 | - roller skate | 2-6, 3-6, 4-6 | - the information for use |
| 11 | - sliding plate | 5-1 | - remote control car |
| 12 | - scooter | 5-2 | - connecting ring of mini car |
| 13 | - aeration tank | 5-3 | - plate at the rear |
| 14 | - heavy object | 6-1 | - remote control helicopter |
| 15 | - connecting ring of heavy object | 6-2 | - connecting ring of helicopter |
| 16 | - warning flashlight | 6-3 | - balancing pole |
| 17 | - scroll | 6-4 | - support frame |
| 18 | - spring hook | 9-1 | - rocket nozzle |
| 19 | - photovoltaic cell | 17-1 | - scroll thread |
| 20 | - power supply circuit | | |

### The Optimal Mode of Execution

The further details of the invention will be elaborated as follows by figures and interpretation of the optimal mode of execution.

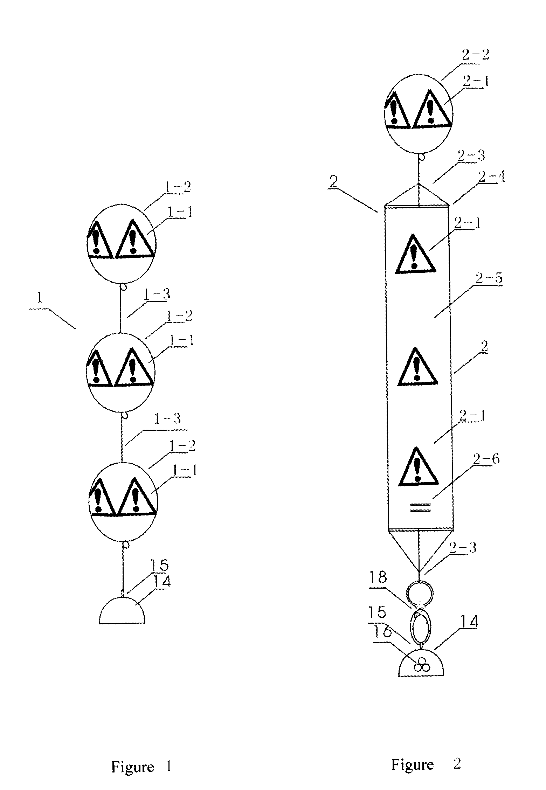

Figure 1 shows type Q-1, the suspension traffic warning sign 1 (hereinafter referred to as Q-1), including the sign of graphic symbol 1-1, which is characterized by merits that overcome the bias in technology that the traffic signs can only be made of hard and rigid material with fixed size and shape, that children's toy cannot use for manufacturing purpose, which means that there is a great gap unable to overcome between toys production and manufacturing. The sign of Q-1 demonstrates the graphic symbols of warning signs painted on the balloon 1-2 inflated with the gas lighter than the air, such as hydrogen or helium. The bottom end of the balloon 1-2 is connected heavy object 14 with cord 1-3. Here, one or more balloons 1-2 can be used and all balloons can be connected in series.
Figure 2 shows type Q-2, the suspension traffic warning sign 2 (hereinafter referred to as Q-2) including graphic symbol 2-1 and hazard warning flashlight 16, which characterized as follows. The bottom end of balloon 2-2 is used to connect a flat banner 2-5. The standard traffic warning signs of the graphic symbol 2-1 and information of the user, 2-6 (hereinafter referred to as the information) are painted on both balloon 2-2 and flat banner 2-5. 2-4 is the support rod of the flat banner 2-5, whose lower end is connected with spring hook 18, which connected with the heavy object 14.

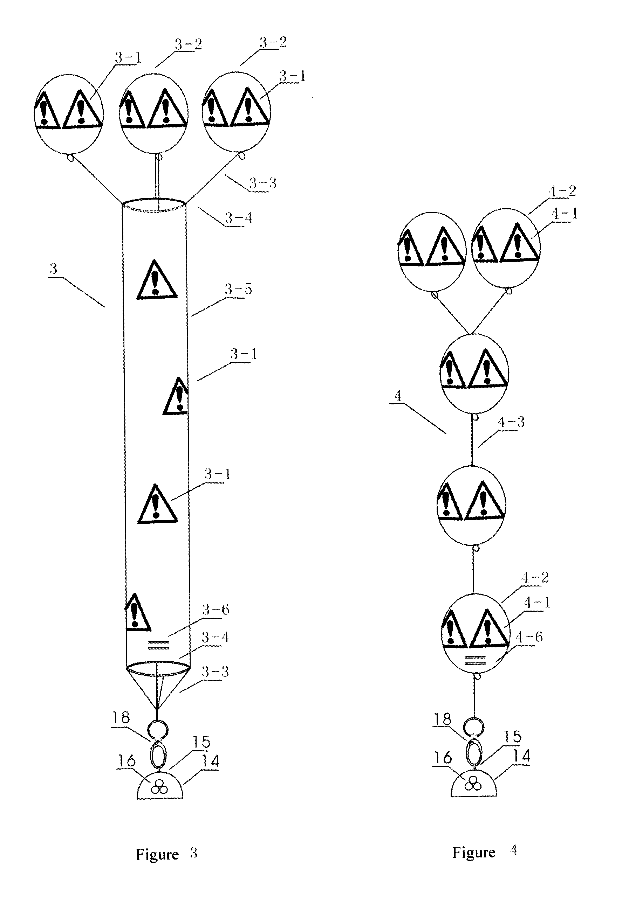

Figure 3 shows type Q-3, the suspension traffic warning sign 3 (hereinafter referred to as Q-3) including graphic symbol 3-1 and hazard warning flashlight 16, which is characterized as follows. More than one balloon 3-2 is connected in parallel. The cylindrical banner 3-5 is made and connected support ring on each end of the banner.
Balloon 3-2 and cylinder banner 3-5 are painted graphic symbol 3-1, whose arrangement can be spiral and whose symbols are painted on the banner 3-5 and make it possible for drivers from all directions to see clearly the whole graphic symbol of 3-1. Connecting line 3-3 connects hydrogen balloon 3-2, banner 3-5 and spring hook 18. The hook can hook up the connecting ring 15 of heavy object 14, making the sign Q-3 integrity. 3-6 is the user's information.
Figure 4 shows type Q-4, the suspension traffic warning sign 4 (hereinafter referred to as Q-4) including graphic symbol 4-1 and hazard warning flashlight 16, which is characterized as follows. More than one hydrogen balloons 4-2 is in mix connection manners, namely, series connection and parallel connection are both used simultaneously. The total number balloons can be three, four, five or even more. The symbol 4-1 will be painted on all balloons. Connecting line 4-3 connects all hydrogen balloons 4-2 and spring hook 18, and makes all parts integrity. The spring hook 18 can hook up the connecting ring 15 of heavy object 14.

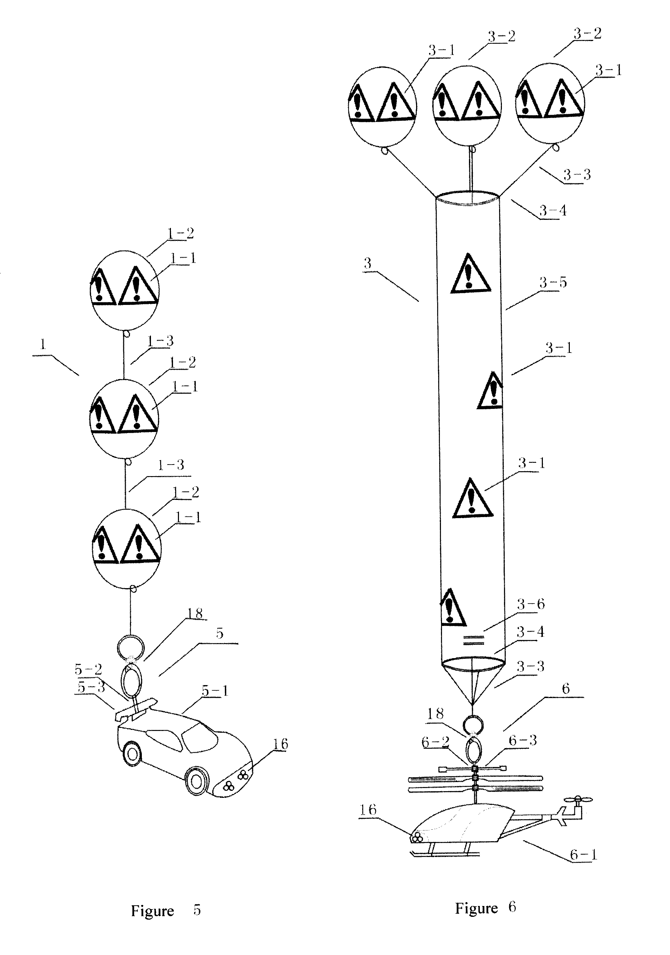

Figure 5 shows type A-1, the suspension traffic warning system 5 (hereinafter referred to as A-1 series). The same features shared by A-1 series and present technology in this field are that both of them use graphic symbol 1-1 as warning sign and have hazard warning flashlight 16. Their differences in technical characteristics can be illustrated as follows. A-1 series overcome all bias that the traffic signs can only be made of hard and rigid materials, that sports goods and children's toys cannot be used for production and manufacturing purposes, that the setting of traffic signs seldom apply "other forces" except labor force. In addition, A-1 series consists of two subsystem, the sign 1 of Q-1 and the carrier, mini remote control car Q-5 (or remote control car model). Above the end of remote control car is a board 5-3, on which is the connecting line 5-2. The sign 1 is removed from heavy object 14 and connected with spring hook 18 hooked up with connecting ring 5-2, realizing the connection and combination between the sign 1 of Q-1 and 5-1, the carrier of mini remote control car.
When in use, the hazard warning flashlight 16 will be turned on and the remote control controls the car 5-1 to carry sign 1 of Q-1 to the designated position, 50m or 150m away to the directions of oncoming vehicles, which undertakes functions of traffic warning signs. When no in use, the remote control can drive the car 5-1 to take sign 1 of Q-1 back to where the automobile breaks down. The head of remote control car 5-1 is loaded with the hazard warning flashlight 16.
Figure 6 shows type A-2, the suspension traffic warning system 6 (hereinafter referred to as A-2 series). The same features shared by A-2 series and present technology in this field are that both of them use graphic symbol 3-1 as warning sign and have hazard warning flashlight 16. Their differences in technical characteristics can be illustrated as follows. A-2 series consists of two subsystems, the sign 3 of Q-3 and the carrier, mini remote control helicopter 6-1. At the head of the helicopter is the hazard warning flashlight 16. Below the sign Q-3 is spring hook 18 connected with balancing pole of remote control helicopter 6-1 when heavy object is removed. Such design realizes the connection and combination between the sign 3 of Q-3 and the carrier of mini remote control helicopter 6-1. When the traffic signs are necessary, the remote control will turn on the hazard warning flashlight 16 and control the helicopter 6-1 flying to land at the designated position with sign 3 of Q3, undertaking functions of traffic warning signs. When no in use, the remote control can drive the helicopter 6-1 to take sign 3 of Q-3 back to where the automobile breaks down.

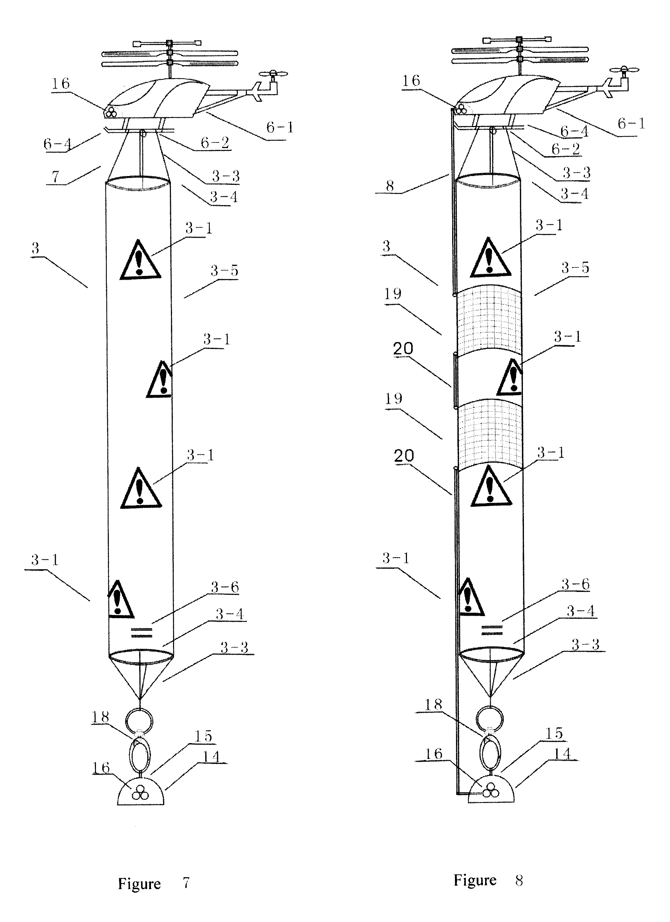

Figure 7 shows type A-3, the suspension traffic warning system 7 (hereinafter referred to as A-3 series). This series is an improved version of A-2 series, namely, removing and taking the place of the balloons of A-2 series with the mini remote control helicopter 6-1 undertaking two functions of carriers and buoyancy. The connection ring 6-1 connected on the support frame 6-4 fitted at the lower part of the helicopter 6-1 can suspend cylinder banner 3-5 hooked up with heavy 14, so that the banner 3-5 can be stretched. When the traffic signs are necessary, the driver can turn on the hazard warning flashlight 16 and remote control, which can send helicopter carrying cylinder banner 3-5 to the designated position, hovering in the air and undertaking functions of traffic warning signs. When malfunction is settled down, the remote control can take A-3 series back.
Figure 8 shows type A-4, the suspension traffic warning system 8 (hereinafter referred to as A-4 series). This series is an improved version of A-3 series. The improvements are using more environmental friendly battery, the photovoltaic cell or thin film photovoltaic cells, as the electric power of mini helicopter 6-1 and hazard warning flashlight 16, both of which are connected with the cell 19 through electronic circuit.

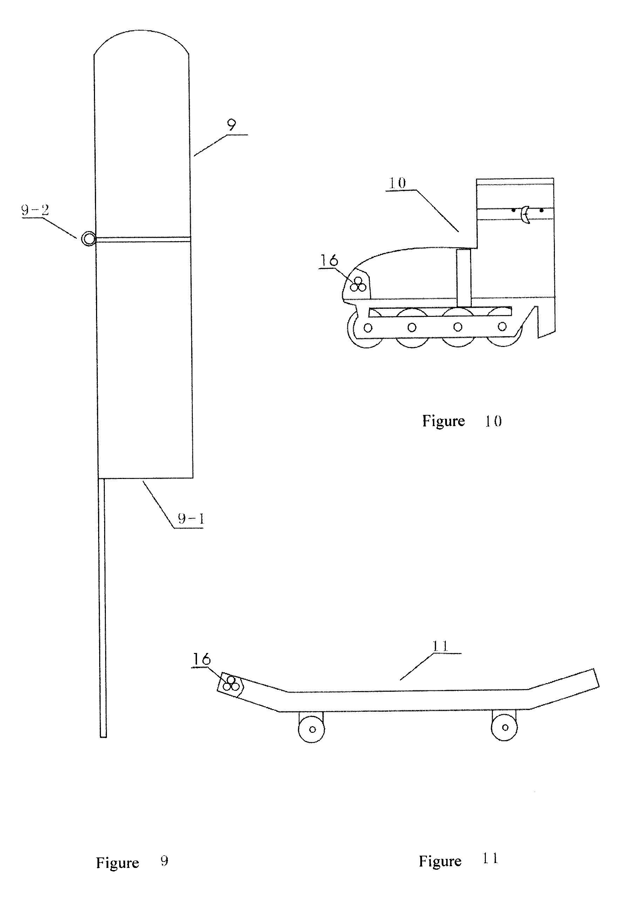

Figure 3, 9, 14, 15 shows type A-5, the suspension traffic warning system (hereinafter referred to as A-5 series). The same features shared by A-5 series and present technology in this field are that both of them use graphic symbol 3-1 as warning sign and have hazard warning flashlight 16. Their differences in technical characteristics can be illustrated as follows. A-2 series consists of three subsystems, the sign 3 of Q-3 and the carrier of civil-used rocket 9 and scroll for retrieving tool 17. The spring hook 18 fitted at the lower part of the sign 3 of Q-3 and the spring hook 18 of the scroll 17 are connected with the connecting ring 9-2 of rocket 9, realizing the connection and combination between the sign 3 of Q-3 and small rocket 9 and scroll 17. When in use, scroll 17-1 is released and small rocket 9 is sent out, which make it possible for the rocket 9 to carry the sign 3 of Q-3 to the designated position. When malfunction is settled down, the scroll 17 retrieves 17-1 and take the sign 3 of Q-3 back. The rocket is designed for single use.
Figure 1, 10, 14, 15 show the type A-6, the suspension traffic warning system (hereinafter referred to as A-6 series), including graphic symbol 1-1 and hazard warning flashlight 16, which contains different features from the present technology in this area. A-6 series consists of three subsystems, the sign 1 of Q-1 and the carrier of roller skates 10 and scroll for retrieving tool 17. When it is necessary to use, the spring hook 18 fitted in the retrieving scroll 17 can be hooked up to the spring hook of the sign 1 of Q-1. Turn on hazard warning flashlight 16 fitted in the head of roller skates and the sign Q-1 can be sent to the designated position by taxiing out with roll skates 10. Release the thread 17-1 of the scroll 17 and driver slides to take scroll 17 back to where malfunctioned vehicle was. When malfunction is settled down, the sign 1 of Q-1 can be taken back by retrieving the thread 17 of the scroll 17-1.
Figure 3, 11, 14, 15 show the type A-7, the suspension traffic warning system (hereinafter referred to as A-7 series), including graphic symbol 3-1 and hazard warning flashlight 16. The difference between A-7 series and the present technology in this area lies in that A-7 series consists of three subsystems, the sign 3 of Q-3 and the carrier of sliding plate 11 and scroll for retrieving tool 17. When it is necessary to use, drivers turn on sign 3 and flashlight 16 fitted in the head of sliding plate and carry sign 3 of Q-3 and slide to designated position by using sliding plate 11.The spring hook 18 of scroll 17 can used to hook up the spring hook 18 of the sign 3 of Q-3. And then the thread will be released, and driver takes scroll 17 back to the parking place by sliding. When malfunction is settled down, the sign 3 of Q-3 can be taken back by retrieving the thread 17 of the scroll 17-1.

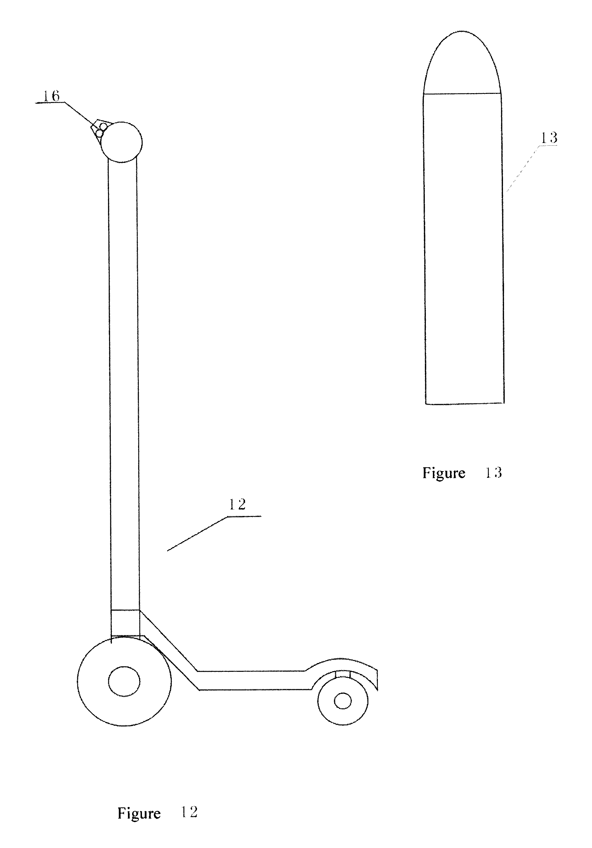

Figure 4, 12, 14, 15 show the type A-8, the suspension traffic warning system (hereinafter referred to as A-8 series), The same features shared by A-8 series and present technology in this field are that both of them use graphic symbol 4-1 as warning sign. The difference between A-8 series and the present technology in this area lies in that A-8 series consists of three subsystems, the sign 4 of Q-4 and the carrier of scooter 12 and scroll for retrieving tool 17. When traffic signs is in need, drivers use the spring hook 18 of scroll 17 to hook up the spring hook of sign 4 of Q-4, set the scroll 17 at road shoulder where the car is parked and in the state of being released, and turn on the flashlight 16 fitted in the handle of the scooter 12. By connecting two spring hook 18 with the thread 17-1 of the scroll 17, the scooter 12 can send sign 4 of Q4 to designated position and return back. When malfunction is settled down, driver can use the thread 17-1 of scroll 17 to take the sign 4 of Q-4 back. Carriers like roller skates, sliding plate, scooter, bicycles of different sizes and specification, and children's car all use machinery of skating, which can be classified into the skating tools. Therefore, based on this superordinate conceptual rationale, the claims of this invention can be combined and proposed.

### Industrial Use

The above mentioned four types of suspension traffic warning signs and six sets of suspension traffic warning sign systems can be manufactured by manufactures of machinery, rocket for civil use, remote control machinery and mass customization. There is no difficulty or problem to manufacture the four types of signs, carriers and even retrieving tools. The six sets of signs systems can also be widely put into practice of transportation. They are so practical that they can effectively solve the problems of temporarily setting traffic signs, which may not be resolved by existing technology. Compared with the technology in use, the substantive features and prominent improvement of suspension traffic warning sign and system are explicit and clear. The comparison table of technical features and effects in use between existing signs and suspension traffic warning signs makes it clear that suspension sign systems can play a positive role and produce favorable effects in dealing with the technical problems of setting traffic warning signs.

The application number is 201120154994.4, an application for the new practical invention, "Suspension Traffic Warning Signs and Sign Systems", authorized by the State Intellectual Property Office of China on February 9th, 2012. The registration and payment has been fulfilled by the applicant on April 18th, 2012.

## Claims

1. A floating road traffic warning sign (1), including warning signs graphic symbols (1-1); **characterized by**: a flag (1) overcoming the prejudice of conventional traffic signs being made of hard materials and excluding children's toys in traffic signs manufacturing; the flag (1) uses a series of balloons (1-2) floating in the air, traffic warning signs graphic symbols (1-1) printed on the balloons (1-2); a weight (14) connected to a lower end of the balloons (1-2), the weight (14) acting as a buoyancy balance and position retainer.

2. A floating road traffic warning sign (1) as claimed in claim 1, wherein the suspension-type road traffic warning signs; wherein: the mark (2) with Balloon (2-2) suspending the plane banners (2-5), floating in the air, the warning flag the printed graphic symbols (2-1) balloon (2-2) and a flat-screen banner (2-5), connection (2-3) all balloon (2-2) banner (2-5) and weights (14) to link up with weights (14) connected to the spring hook (18), the lower end of the flat-screen banner (2-5) also use the information (2-6), heavy (14) built-in hazard lights (16).

3. A floating road traffic warning sign (1) as set forth in claim 1, wherein the suspension-type road traffic warning signs; wherein said flag (3) using a plurality of hydrogen balloon (3-2) and connected, connected to the ball of hydrogen below the cylindrical banners (3 - 5), the upper and lower ends of the banner (3-5), the elastic support ring (3-4); hydrogen balloon (3-2) and a cylindrical banners (3-5), the graphical symbols printed with a warning sign (3 - 1), cylindrical banners (3-5) on warning signs printed pattern (3-1) to take the spiral arrangement; cylindrical the scrolls (3-5) lower use information (3-6); banners (3-5) the lower end by the spring hook (18) is connected to heavy objects (14), heavy (14) built-in hazard lights (16).

4. A floating road traffic warning sign (1) as set forth in claim 1, wherein the suspension-type road traffic warning signs; wherein: said flag (4) the use of a plurality of ball of hydrogen (4-2) mixed connected manner, warning signs graphic symbols (4-1) All printed ball of hydrogen (4-2), the connecting line (4-3) is connected the hydrogen ball (4-2) and the spring hook (18) as a whole, the spring hook (18) is connected to weights (14) the bottom of the balloon (4-2) the surface use information (4-6), built-in hazard lights (16) weights (14).

5. A suspension road traffic warning sign system (5), including warning signs graphic symbols (1-1) and the hazard lights (16), **characterized by**: the flag system (5) to overcome any traffic signs technical bias; shape fixed hard materials, sporting goods and toys for children are not used for production activities, the set is not outside the human "external force" of the flag system (5) Traffic warning signs (1) the two subsystems miniature remote control cars as a means of delivery (5-1); traffic warning signs (1) remove the weights (14), connected to a miniature remote control car (5-1) snap hook (18), mini remote car (5-1) bear heavy objects and means of delivery, such warning signs (1) mini remote control car (5-1) connected on the combination became a floating road traffic warning sign system (5); need to use warning traffic signs, turn on the hazard lights (16), started with a remote control and manipulation of micro remote control cars (5-1), led the warning signs (1) driving to a predetermined location parking warning; finished using the remote Jian moving micro remote control cars (5-1) and led the warning signs (1) drove back fault car at.

6. A the suspension road traffic warning sign system (6); graphic symbols (3-1), including road traffic signs and hazard lights (16); **characterized by**: the sign system (6) to overcome any traffic signs are fixed shape hard materials, sporting goods and toys for children are not used for production activities, the set does not use the "external forces" outside the human bias;A-2 series consists of two subsystems, the sign 3 of q3 and the carrier ,mini remote control helicopter (6-1) Micro Helicopter (6-1) connected ring (6-2),use sign (3) of the spring hook (18) hooked warning signs to achieve flag (3) connection with the combination with remote control the miniature helicopters (6-1); need to use the traffic warning signs, turn on the hazard lights (16) to use the remote control to start the mini-helicopter (6-1), the drive warning signs (3), fly to the landing in a predetermined position, assume the function of traffic warning signs; after use with a remote control to start the remote control helicopter (6-1) and led the warning signs (3) to fly back to the fault car at.

7. A the suspension road traffic warning sign system as claimed in claim 6, the suspension road traffic warning signs system; **characterized by**: a traffic warning sign system (7) remove the balloon, the balloon with micro helicopters (6-1) replaced, bear generate buoyancy and carrying the tools two functions.

8. The process as claimed in claim 7, wherein the floating road traffic warning sign system, wherein: said marker system (8) the use of photovoltaic cells (19) instead of the conventional battery power via the power supply line (20) for remote control micro helicopter (6-1) and the hazard lights (16) power supply.

9. A suspension road traffic warning signs, including road traffic signs graphic symbols (3-1) and the hazard lights (16); characterized: the flag system to overcome all the traffic signs are fixed shape of the hard quality materials, sporting goods and toys for children are not used for production activities, set it does not use the "external forces" outside the human bias; traffic warning signs (3) of the marking systems, the civilian small rockets as a means of delivery (9) and the sill (17) as a recovery tool of the three subsystems; using a spring hook (18) of the warning signs (3) and a spring hook (18) of the drive rod (17) to hook a connecting ring (9-2) of a small rocket (9), and a warning sign of each part of the system connections and combinations need to use warning signs, release the car lever line (17-1), launch a small rocket (9), Rockets (9) carrying a flag (3) and the car lever line (17-1) to fly to a predetermined position warning, troubleshooting is completed, the a car lever (17) to close line (17-1), to recover the flag (3).

10. A floating road traffic warning flag system (6); including road traffic signs graphic symbols (3-1) and the hazard lights (16); **characterized by**: the flag system to overcome any traffic signs are shape fixed rigid materials, sporting goods and toys for children are not used for production activities, set it does not use the "external forces" outside the human bias; traffic warning signs (3) of the flag system and as a means of delivery skating tools and cars as a recovery tool rod (17) of three subsystems; need to use the traffic warning signs, driving people skating tools with a flag (3) and sill (17), coasting to a predetermined location, the traffic warning signs (3) provided on the shoulder position, the use of a spring hook (18) of the drive lever (17) for hooking the spring hook (18) of the flag (3), and then put the line, while coasting with the drive lever (17) back to the parking place rod (17) - on the hard shoulder be Troubleshooting finished sill - (17) closing rod line (17-1), the sign(3) to recover.
1) A floating road traffic warning sign (1), including warning signs graphic symbols (1-1); **characterized by**: a flag (1) overcoming the prejudice of conventional traffic signs being made of hard materials and excluding children's toys in traffic signs manufacturing; the flag (1) uses a series of balloons (1-2) floating in the air, traffic warning signs graphic symbols (1-1) printed on the balloons (1-2); a weight (14) connected to a lower end of the balloons (1-2), the weight (14) acting as a buoyancy balance and position retainer, the entire symbol can be up to 3m to 5m, or even 7m, in height.
2) A floating road traffic warning sign (1) as claimed in claim 1, wherein the suspension-type road traffic warning signs; wherein: the mark (2) with Balloon (2-2) suspending the plane banners (2-5), floating in the air, the warning flag the printed graphic symbols (2-1) balloon (2-2) and a flat-screen banner (2-5), connection (2-3) all balloon (2-2) banner (2-5) and weights (14) to link up with weights (14) connected to the spring hook (18), the lower end of the flat-screen banner (2-5) also use the information (2-6), heavy (14) built-in hazard lights (16).
3) A floating road traffic warning sign (1) as set forth in claim 1, wherein the suspension-type road traffic warning signs; wherein said flag (3) using a plurality of hydrogen balloon (3-2) and connected, connected to the ball of hydrogen below the cylindrical banners (3 - 5), the upper and lower ends of the banner (3-5), the elastic support ring (3-4); hydrogen balloon (3-2) and a cylindrical banners (3-5), the graphical symbols printed with a warning sign (3 - 1), cylindrical banners (3-5) on warning signs printed pattern (3-1) to take the spiral arrangement; cylindrical the scrolls (3-5) lower use information (3-6); banners (3-5) the lower end by the spring hook (18) is connected to heavy objects (14), heavy (14) built-in hazard lights (16).
4) A floating road traffic warning sign (1) as set forth in claim 1, wherein the suspension-type road traffic warning signs; wherein: said flag (4) the use of a plurality of ball of hydrogen (4-2) mixed connected manner, warning signs graphic symbols (4-1) All printed ball of hydrogen (4-2), the connecting line (4-3) is connected the hydrogen ball (4-2) and the spring hook (18) as a whole, the spring hook (18) is connected to weights (14) the bottom of the balloon (4-2) the surface use information (4-6), built-in hazard lights (16) weights (14).
5) A suspension road traffic warning sign system (5), including warning signs graphic symbols (1-1) and the hazard lights (16), **characterized by**: the flag system (5) to overcome any traffic signs technical bias; shape fixed hard materials, sporting goods and toys for children are not used for production activities, the set is not outside the human "external force" of the flag system (5) Traffic warning signs (1) the two subsystems miniature remote control cars as a means of delivery (5-1); traffic warning signs (1) remove the weights (14), connected to a miniature remote control car (5-1) snap hook (18), mini remote car (5-1) bear heavy objects and means of delivery, such warning signs (1) mini remote control car (5-1) connected on the combination became a floating road traffic warning sign system (5); need to use warning traffic signs, turn on the hazard lights (16), started with a remote control and manipulation of micro remote control cars (5-1), led the warning signs (1) driving to a predetermined location parking warning; finished using the remote Jian moving micro remote control cars (5-1) and led the warning signs (1) drove back fault car at.
6) A the suspension road traffic warning sign system (6); graphic symbols (3-1), including road traffic signs and hazard lights (16); **characterized by**: the sign system (6) to overcome any traffic signs are fixed shape hard materials, sporting goods and toys for children are not used for production activities, the set does not use the "external forces" outside the human bias;A-2 series consists of two subsystems, the sign 3 of q3 and the carrier ,mini remote control helicopter (6-1) Micro Helicopter (6-1) connected ring (6-2),use sign (3) of the spring hook (18) hooked warning signs to achieve flag (3) connection with the combination with remote control the miniature helicopters (6-1); need to use the traffic warning signs, turn on the hazard lights (16) to use the remote control to start the mini-helicopter (6-1), the drive warning signs (3), fly to the landing in a predetermined position, assume the function of traffic warning signs; after use with a remote control to start the remote control helicopter (6-1) and led the warning signs (3) to fly back to the fault car at.
7) A the suspension road traffic warning sign system as claimed in claim 6, the suspension road traffic warning signs system; **characterized by**: a traffic warning sign system (7) remove the balloon, the balloon with micro helicopters (6-1) replaced, bear generate buoyancy and carrying the tools two functions.
8) The process as claimed in claim 7, wherein the floating road traffic warning sign system, wherein: said marker system (8) the use of photovoltaic cells (19) instead of the conventional battery power via the power supply line (20) for remote control micro helicopter (6-1) and the hazard lights (16) power supply.
9) A suspension road traffic warning signs, including road traffic signs graphic symbols (3-1) and the hazard lights (16); characterized: the flag system to overcome all the traffic signs are fixed shape of the hard quality materials, sporting goods and toys for children are not used for production activities, set it does not use the "external forces" outside the human bias; traffic warning signs (3) of the marking systems, the civilian small rockets as a means of delivery (9) and the sill (17) as a recovery tool of the three subsystems; using a spring hook (18) of the warning signs (3) and a spring hook (18) of the drive rod (17) to hook a connecting ring (9-2) of a small rocket (9), and a warning sign of each part of the system connections and combinations need to use warning signs, release the car lever line (17-1), launch a small rocket (9), Rockets (9) carrying a flag (3) and the car lever line (17-1) to fly to a predetermined position warning, troubleshooting is completed, the a car lever (17) to close line (17-1), to recover the flag (3).
10) A floating road traffic warning flag system (6); including road traffic signs graphic symbols (3-1) and the hazard lights (16); **characterized by**: the flag system to overcome any traffic signs are shape fixed rigid materials, sporting goods and toys for children are not used for production activities, set it does not use the "external forces" outside the human bias; traffic warning signs (3) of the flag system and as a means of delivery skating tools and cars as a recovery tool rod (17) of three subsystems; need to use the traffic warning signs, driving people skating tools with a flag (3) and sill (17), coasting to a predetermined location, the traffic warning signs (3) provided on the shoulder position, the use of a spring hook (18) of the drive lever (17) for hooking the spring hook (18) of the flag (3), and then put the line, while coasting with the drive lever (17) back to the parking place rod (17) - on the hard shoulder be Troubleshooting finished sill - (17) closing rod line (17-1), the sign(3) to recover.

## Amended claims

### Amended claims under Art. 19.1 PCT

The end of claim 1 of the patent specification of International patent application no. PCT/CN2012/000656 is inserted with 'the entire symbol can be up to 3m to 5m, or even 7m'. We submit that the amendment does not add matter to the description or drawings, as page 2 of the original description specifies a warning sign of '3m to 5m, or higher'. This is to draw attention to the quantitative and qualitative differences between the current invention and the prior art (including D2), that it is insufficient to have only delivery tools.

For claims 1-10 two-stage "effect characteristic", do not prune, be retained, because the value of PCT international search and preliminary examination Guide, long-term need to whether the invention is "to meet the long-term needs," 13.16 "; overcome scientific prejudice ";" Other people have tried to complete, but did not complete "(as D1, D2) to establish creative cofactor; patent examination guidelines" P184 "embodies the invention to overcome the technical bias the technical features, should be written in the claims; Otherwise, even if the specification has described, evaluation invention creatively is also disregarded.

It should also be authorized officials to pay attention to the D1 technical program does not comply with the provisions of Article 68 of the "People's Republic of China on Road Traffic Safety Law, and should not be classified as art areas; according to Brian (Bryn) chart tips, long The known technical solutions (conventional techniques) to solve the problem of the long known is the "inventive".
